# EUROPEAN PATENT SPECIFICATION

(11) **EP 3 426 048 B1**
(45) Date of publication and mention of the grant of the patent: **01.07.2020**
(21) Application number: 17709089.1
(22) Date of filing: 07.03.2017
(51) Int. Cl.: A23P 30/34, A23L 7/17, B29C 48/00, B29C 48/16, A21C 11/16, B30B 11/22, A23P 30/25, A23P 30/30, A23L 7/117

(54) **USE OF AN EXTRUSION DIE FOR EXTRUDING A FOOD PRODUCT AND USE OF A FOOD PRODUCT MANUFACTURING MACHINE.**
BENUTZUNG EINER EXTRUSIONSKOPFS ZUM EXTRUDIEREN EINES NAHRUNGSMITTELS UND BENUTZUNG EINER NAHRUNGSMITTELHERSTELLUNGSMASCHINE.
UTILISATION D'UNE FILIÈRE D'EXTRUSION POUR FABRIQUER UN PRODUIT ALIMENTAIRE ET UTILISATION D'UNE MACHINE COMPRENENT CETTE FILIÈRE.

(30) Priority: 10.03.2016 EP 16159745
(43) Date of publication of application: 16.01.2019
(73) Proprietor: Société des Produits Nestlé S.A., 1800 Vevey (CH)
(72) Inventor: ESTEVE, Emilien, 1446 Baulmes (CH); TOGNET BRUCHET, Remi, 1176 Saint Livres (VD) (CH)
(74) Representative: Rosolen-Delarue, Katell
(86) International application number: PCT/EP2017/055323
(87) International publication number: WO 2017/153407

(56) References cited:
- EP-A1- 2 756 758
- EP-A2- 0 168 255
- DE-A1- 19 936 828

## Description

### Technical Field

The invention relates to the use of an extrusion die for the manufacture of expanded extruded or co-extruded foodstuff and in particular breakfast cereals parcels.

### Background

Food products such as breakfast cereals in ready-to-eat ("RTE") are commonly formed of a plurality of discrete (that is individual) flakes or parcels also called pillows which a consumer can eat for example with milk.

These cereal flakes or pillows typically contain cereal grains such as wheat, rice, oats, corn, etc. and ancillary ingredients such as sugars, salts, oils, etc. Flavouring and colouring agents, vitamins and mineral fortifiers can also typically be included.

Numerous types of breakfast cereal exist and can be produced by processing the cereal, for example by toasting, cooking, forming a cereal based dough, extruding and/or moulding them before packaging for consumer delivery.

Particular care is taken in determining the cooking parameters to ensure that the product is palatable to the consumer and has a good shelf life.

EP2756758 A1 relates to a fabricated snack product has a tubular body comprising a perimeter wall defining the perimeter of the tubular body, the perimeter wall having an inner surface and an outer surface, wherein both the inner surface and the outer surface have a plurality of parallel ridges and troughs whereby the perimeter wall is of corrugated configuration. The snack product in EP2756758 A1 is fried and has a bulk density of at least 100g per liter, the snack product having a moisture content of not more than 3% by weight. The snack product is obtainable using a process comprising extrusion and cooking.

DE19936828 A1 discloses the production of twisted baking articles comprising at least one outer dough material and at least one inner dough material or dough filling, a nozzle assembly comprises an inner fixed nozzle and an outer nozzle which surrounds the former in a revolving manner. An opening of the outer nozzle is situated in the flow direction behind an opening of the inner nozzle so that the two dough materials flow together at the opening of the inner nozzle and so that, along its path to the opening of the outer nozzle, the inner dough material is driven in rotation by the outer dough material and thus compressed.

EP0168255 A2 discloses a co-extrusion apparatus for forming a icontinuous food product having dissimilar inner and outer portions wherein said inner portion is enveloped by said outer portion and said outer portion is a dough containing particulate material composed of particles.

However, as breakfast cereals become more sophisticated, it has become more and more difficult to manufacture satisfactory products that the consumer finds appealing to eat in terms of both taste, appearance and texture, whilst simultaneously allowing for high production rates and low material waste.

Particularly, the natural aspect and the fact that the breakfast cereals does not appear to be too processed is important from a consumer preference standpoint.

The present invention concerns the use of a new type of extrusion die to be connected to the end of an extruder, for the simple and fast manufacture of cereal based food product in the form of extruded or co-extruded discrete parcels (flakes or pillows) having natural and appealing appearance.

The term 'extruder' refers to manufacturing machine that allows to manufacture both extruded and co-extruded food products and applying an extrusion or co-extrusion process.

The term 'extruded' is used herein to refer to a type of cereal based food product in which a single foodstuff component is extruded into a single flow or 'rope' which is then cut into individual parcels to form cereals based food product parcels like flakes, food bites or balls for example.

The term 'co-extruded' is used herein to refer to a type of cereal based food product in which a pair of foodstuff components are simultaneously extruded into a single flow or 'rope' which is then cut into individual parcels to form cereals based food product parcels or pillows comprising an outer periphery and an inner core filled with another ingredient or hollowed.

The term 'pillow' is intended to describe the narrow, generally flat perimeter of the parcel with central bulbous or convex centre comprising an inner core (filled or empty). During conventional extrusion process, well-known to the skilled person, the pressure drop at the exit of the extruder causes the expansion of gas bubbles of a diameter range of approximately 50 µm to 1.5 mm which results in a random surface porosity of the same range. This expansion process along with the surface porosity can lead to localized and uncontrolled surface cracks ranging from 50 µm to 1.5 mm.

One can observe this phenomena on conventional extruded cereal breakfast products or extruded salty snacks. Such products are clearly identified by the consumer as being processed food.

It is therefore an object of the present invention to provide a new use of an extrusion die, connected to the end of an extruder, for extruding cereal based food product as claimed in claim 1, allowing a new type of extruded or co-extruded breakfast cereal to be manufactured which allows for appealing and natural appearance of the parcels with a highly pleasant texture for the consumer.

### Summary of the Invention

In a first aspect of the invention there is provided the use of an extrusion die for extruding a food product as claimed in claim 1.

Said extrusion die presents in transversal cross-section, two different portions that participates to the formation of the extruded food product.

The two portions are namely:
- a circular central opened portion; and
- a peripheral indented opened portion comprising indentations in which the indentions are in communication with the circular central portion thereby forming longitudinal grooves on the surface of the extruded product.

Hence the extruded food product exiting the extrusion die passes at the same time through the two portions thereby forming a rope of extruded product having on its external surface some specific expended features in the form of macro-cracks on the surface of the extruded food product, the rope being then after cut in individual parcels. These macro-cracks have the appearance of scales or of a pearly structure which are oriented perpendicular to longitudinal grooves created by the die.

The proposed die design (number of indentation and/or size of indentation) combined with the process parameters and the high viscosity (low humidity) of the extruded food product allow to obtain a scale structure at the surface of the extruded food product and to control the size and shape of the scales.

The scales are of different nature and their size are on a totally different range than the localized and uncontrolled surface cracks (occurring on all extrusion process). The size of the scales can range up to 15 mm in length, the width being defined by the die design: indentation spacing.

Advantageously, these scales allow the product to present a non-uniform surface and to look very natural just as the consumer requires.

Preferably, but not necessarily the indentations of the extrusion die are regularly spaced on the periphery of the circular central portion.

Preferably, the extrusion die presents indentations having a circular shape, but in some further embodiment, the indentations provided on the extrusion die may be triangular or square according to the effect that one intends to give to the pillows.

Advantageously, the peripheral indented portion comprises a plurality of indentations in order to create grooves and scales leading to this natural effect on the entire surface of the pillow. Preferably, the number of indentation in the peripheral indented opened portion varies between 8 and 20 indentations.

The inventors have established that a ratio of the surface between the circular central portion and the peripheral indented portion being in the range of 1:15 to 1:45 will allows to have a good level of scales at the surface of the rope while ensuring that the structure of the centre of the pillow is preserved in term of layout and texture.

Furthermore, in the case of a co-extrusion process, the extrusion die accommodates a central co-extrusion nozzle in the circular central opened portion in order to supply a second blend of ingredients forming the filling of the co-extruded pillow.

A food product manufacturing machine comprises an extruder on the extremity of which is connected the extrusion die for the manufacture of a stream of food product and a separating apparatus for the formation of a plurality of individual food items from the stream of food product.

Specifically, the extruder may be used for the formation of extruded product using an extrusion process or a co-extrusion process.

As known to the skilled person, when a co-extrusion process is used, there is the formation of a flow of ingredient comprising an outer periphery and an inner core i.e. a flow of ingredients with one ingredient surrounding the second ingredient or a hollow core. The manufacturing machine also comprise a separating apparatus separating the stream of food product into discrete parcels (pillows).

A food manufacturing process comprises the steps of:
- extruding a food product using an extruder, the food product passing through an extrusion die connected to the end of the extruder. Said extrusion die presents in transversal cross-section:
   - a circular central opened portion; and
   - a peripheral indented opened portion comprising indentations, in which the indentions are in communication with the circular central portion thereby forming longitudinal grooves on the surface of the extruded product,
   said food product being in the form of a stream of extruded food product when exiting the extrusion die and having a humidity level between 2.5 to 6.5% of the extruded food product;
- separating the stream of extruded food product into a plurality of individual food items. After the food product, made of cooked cereal based dough, is processed in the extruder and is coming out of it and separated into discrete parcels or pillows.

According to the type of extrusion process that is used, extrusion or co-extrusion, a step of transferring the stream of extruded food product to a separating apparatus before the step of separating the stream of extruded food product may be needed.

The final shape of the food bites (made by extrusion process) or of the pillows (made by co-extrusion) may vary according to the process that is used in particular the separation of the rope coming out of the extruder into discrete parcels.

Also, by varying the diameters and/or shape of the indentation of the extrusion die, the coefficient of expansion of the material and its composition, it is possible to obtain products whose texture varies between glazed, hard, brittle, crusty, crumbly, crisp or crunchy, for example.

The food bites or pillows produced thanks to the presented process using the proposed extrusion die comprise longitudinal grooves and a scales structure (macro-cracks) on their external surface.

The scales of the scales structure have a size going up to 15 mm in length and are oriented perpendicular to the longitudinal grooves.

The extruded or co-extruded individual food item are obtained using the proposed extrusion die present a high viscosity (humidity level between 2.5 to 6.5%).

By humidity level between 2.5 to 6.5% of the extruded food product, it is intended humidity level of the entire co-extruded pillow that comprises a confectionary filling, for example.

These scales (macro-cracks) are of different nature and of different size than the localized and uncontrolled surface cracks (occurring on all extrusion process) and are formed during the extrusion process thanks to the die design, the production parameters and the high viscosity (low humidity) of the extruded food product

As earlier mentioned the proposed food item in form of food bites or pillows are cereal based individual food item. In particular a breakfast cereal based individual food item.

It is possible to envisage various cereal products such as cereals for breakfast, dry pet food, salted or sweet snacks, infant cereals, confectionary products and dietary foods, for example.

The cereal based product is based on starch-containing substance which may be a whole grain flour and/or a refined flour of a cereal, especially wheat, barley, rice and/or maize, and/or a starch, especially of wheat, barley, rice, tapioca, potato and/or maize, for example.

The cereal product can be a breakfast cereal product co-extruded at the same time with a foodstuff paste, for example a chocolate paste, in order to produce cereal based pillows filled with chocolate.

The present cereal may be consumed as it is or coated, especially with a chocolate coating, a sugar syrup, a fruit syrup, a honey syrup, or with a coating containing vitamins and flavourings, for example Other ingredients can be used for forming the filling paste such as cream, fruit puree, jam or honey in the case of sweat breakfast cereals or sugared snacks.

In the case of savoury or salted cereal based pillow, the filling paste can contain cheese, meat, or vegetable based filling for example.

Thus, an edible food product can be produced which has a dual texture throughout each of the discrete product parcels. A distinctive edible produce can be manufactured with harder or 'crunchy' outer layer and soft and creamy filling. Such a product is appealing to the consumer since is provides an unusual texture when eaten.

A notable advantage of the cereal product is its aerated and crisp texture along with this natural appearance.

### Brief Description of the Drawings

Embodiments of the invention will now be described by way of example with reference to the following figures.

In the drawings, like reference characters generally refer to the same parts throughout the different views. Also, the drawings are not necessarily to scale, emphasis instead generally being placed upon illustrating the principles of the invention. In the following description, various aspects of the present invention are described with reference to the following drawings, in which:
Figure 1A shows a schematic of an extruder integrating an extrusion die and used in an extrusion process;
Figure 1B shows a schematic of a transversal cross section of an individual food item obtained using the extruder of Figure 1A in an extrusion process;
Figure 2A shows a schematic of an extruder integrating an extrusion die and used in a co-extrusion process;
Figure 2B shows a schematic of a transversal cross section of an individual food item obtained using the extruder of Figure 2A in a co-extrusion process;
Figure 3 shows a lateral cross section view of the extrusion die;
Figure 4 shows an axial view of the extrusion die of Figure 3;
Figure 5 shows a picture of the extrusion die of Figure 3 and 4;
Figure 6A and 6B show axial views of alternative extrusion die;
Figure 7 shows a picture of breakfast cereal pillows manufactured according to the invention ; and
Figure 8 shows a picture of breakfast cereal pillows manufactured using a conventional circular die and a process using conventional humidity conditions;

Any reference to prior art documents in this specification is not to be considered an admission that such prior art is widely known or forms part of the common general knowledge in the field.

As used in this specification, the words "comprises", "comprising", and similar words, are not to be interpreted in an exclusive or exhaustive sense. In other words, they are intended to mean "including, but not limited to".

The invention is further described with reference to the following examples. It will be appreciated that the invention as claimed is not intended to be limited in any way by these examples.

### Detailed Description

Aspects of the invention are directed to the use of an extrusion die suitable for forming cereal pillows, an extruder containing the extruder die.

The use of the present invention is concerned with cereal parcels or pillows which have an outer edible layer surrounding an inner edible or hollow core and which are produced by extrusion or co-extrusion.

As is well known to those of ordinary skill in the art of breakfast cereal extrusion, a cereal mix for use with an extruder can be prepared by blending various dry cereal ingredients and additional ingredients together with water. The water may be added during a pre-conditioning step in the form of liquid water and/or steam. After pre-conditioning (if any), the cereal mix is introduced into an extruder. Water may be also added directly in the extruder if needed. Within the extruder, the cereal mix is cooked and mechanically worked to form a cooked dough. The cooked dough in the extruder is at a temperature above 100°C (between 110°C and 145°C according to the expansion process - extrusion or co-extrusion).

The cooked dough is then extruded through an extrusion die positioned at the downstream end of the extruder with the following steps. Resulting from the process parameter, the dough is under a pressure between 50 and 120 bars in the extruder. The dough, which is above the glass transition temperature is pushed through the die. As the pressure is released, the super saturated steam flashes off provoking the expansion of the dough. As the steam flashes off, the dough moisture decreases greatly and the temperature decreases to a value near 100°C. Both of these leading the dough below the glass transition temperature in the glassy state.

The evaporation of the water contained in the dough further to the pressure release provokes a change in the structure of the dough causing expansion of said dough. The expanded dough is discharged out of the extruder as a continuous tube or rope of extruded cereal food product.

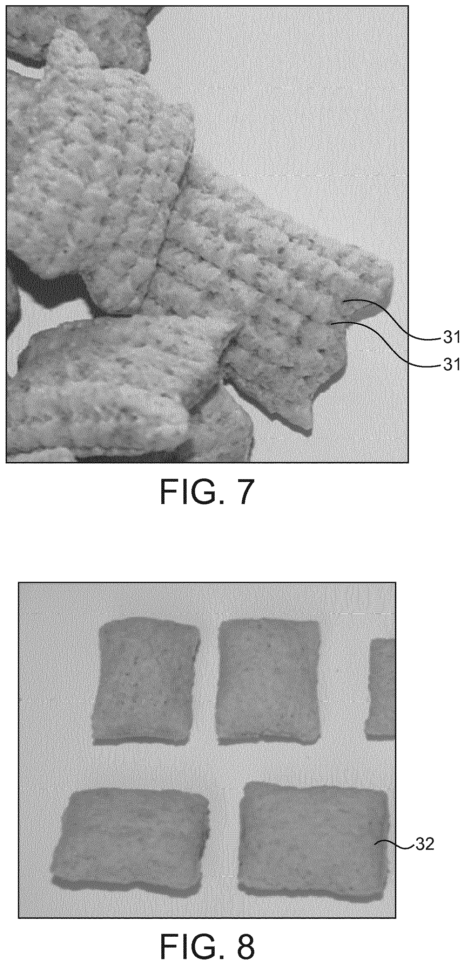

Particularly, but not exclusively the manufacturing apparatus that will be described in connection with the figures may be used to manufacture a breakfast cereal of the type and shape shown in figure 7 that will be described later.

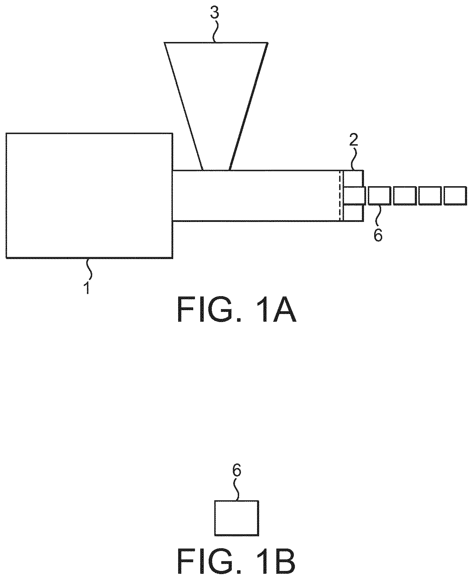

Figure 1A is a schematic of the manufacturing apparatus incorporating an extruding machine or extruder 1. Such machines are commercially available and manufactured by, for example, Buhler of Utzwil, Switzerland. In the present case, the extruder 1 is configured for applying an extrusion process.

In connection with figure 1A, the blend of ingredients is loaded into the extruder 1 by means of a hopper 3 (or other supply means) and the materials are processed internally into the extruder.

The extruder has an extrusion die 2 connected to the end of the extruder which discharges out of the extruder a continuous dough matrix of extruded food product. Rotating knife blades (not represented) at the extrusion die face cut the dough as it is extruded into discrete pieces 6 like food bites.

In a post-extrusion process, the extruded pieces may be dried and optionally coated.

Figure 1B shows a schematic of a transversal cross section of an individual extruded food piece 6 obtained using the manufacturing apparatus of Figure 1A in an extrusion process.

The food piece is a plain extruded item, for example a flake or a food bite having an aerated and crunchy texture.

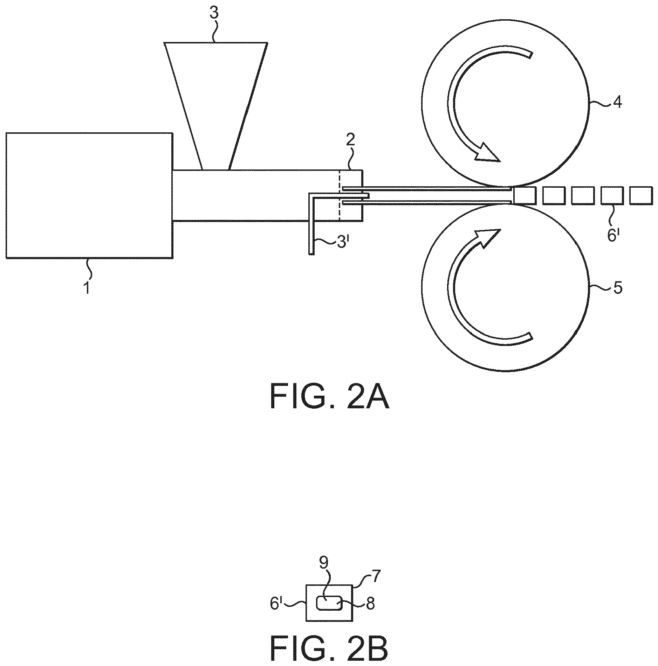

Figure 2A shows a schematic of an extruder integrating the extrusion die and used in a co-extrusion process.

The term 'co-extruded' used herein refers to a process where a pair of food ingredients are simultaneously extruded. The foodstuffs may be extruded as a homogeneous blend or, more advantageously, they may be extruded such that one foodstuff surrounds a second foodstuff i.e. the co-extrusion comprises an outer layer and an inner cored which can be filled or empty.

Hence, the main difference between an extrusion process and a co-extrusion process is that the final extruded product is formed of an outer layer made of a first foodstuff and an inner core which can be hollowed or filled with a second foodstuff called filling.

In the co-extruding process relevant to the present invention, generally two blend of ingredients are introduced into the extruder and are processed such that the extruded tubular output from the co-extruder has one blend of ingredients forming an outer edible layer 7 and the second blend of ingredients contained within the outer layer and forming an inner core 8 to the tube or rope. As mentioned, the inner core 8 can be hollowed or filled with a second foodstuff called filling 9.

In an alternative, the co-extruded product may comprise an outer edible layer 7 and a hollow core 8. In this case, only one blend of ingredients is supplied to the extruder.

Similarly as figure 1A, the extruder 1 of figure 2A comprises a hopper 3 which is used for supplying a blend of material

Supply means 3' are provided to allow supplying a second blend of ingredients that will form the filling of the co-extruded product. Supply means 3' may integrate a pump or any other means that will allow supplying the second blend of ingredients.

The blends of ingredients once loaded into the extruder 1 are processed internally into the extruder and discharged out of the extruder through an extrusion die 2 connected to the end of the extruder, in the form of a continuous tube or 'rope' of extruded food product after co-extrusion of the processed material.

In addition to figure 1A but in the frame of the co-extrusion process of figure 2A, as the extruded food product is discharged as a rope, it needs to be cut in a separated process step.

Figure 2A also shows a crimping roller 4 and an opposing second roller 5. The crimping roller 4 and second roller 5 are rotatable mounted and arranged to rotate in opposing directions as shown by the arrows in Figure 2A.

In operation the extruder generates the tube or rope of extruded cereal product which is conveyed by a conveyor belt (or other suitable means - not shown) so as to pass into between the crimping roller 4 and second roller 5.

As the tube passes between the two rollers, the rollers are simultaneously rotating and the tube is crimped and divided into a plurality of discrete parcels or pillows 6'.

The term 'crimped' refers to a process of concentrated compression of the food material causing sealing of the rope and separation (i.e. cutting) of the material.

The parcels or pillows 6 can be conveyed away from the rollers, again using a suitable conveyor belt or the like (not shown) to be further processed before packing.

Figure 2B a schematic of a transversal cross section of an individual extruded food piece 6' obtained using the manufacturing apparatus of Figure 2A in a co-extrusion process.

The food piece 6' comprises an outer layer of a first foodstuff 7 and an inner core 8. The inner core is preferably stuffed with a second foodstuff 9 also called filling. The co-extrusion process allows having a food piece 6' having a crunchy outer texture along with a creamy sensation coming from the filling 9.

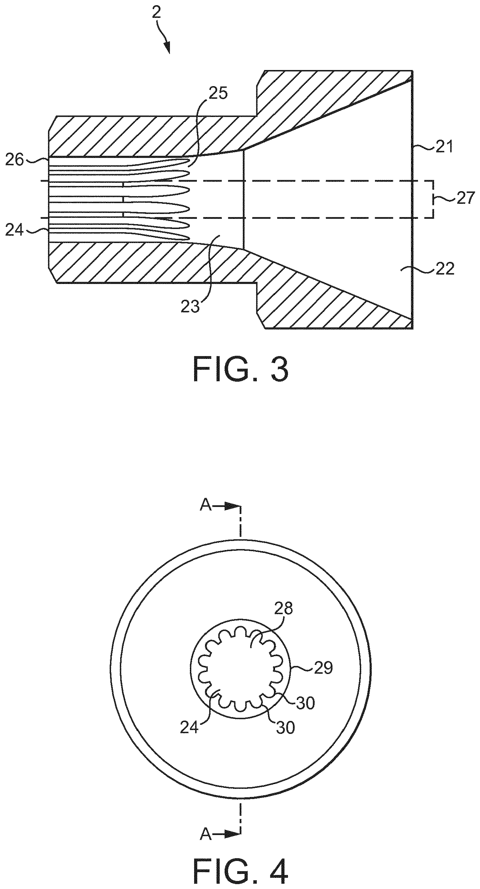

Figure 3 shows illustrative cross section lateral view of an extrusion die for extruding cooked dough. Said extrusion die is specifically designed for extruding a food product having a humidity level between 2.5 to 6.5% of the extruded food product (incorporating the filling in case of a pillow).

The range of humidity level between 2.5 to 6.5 % is very specific and linked to the high viscosity of the product entering the extruder. It is below the usual humidity level which is normally over 7%. This low level of humidity and high viscosity of the product in combination with the use of the extrusion die according to the invention, allows having food pieces with natural and unprocessed aspect for which the consumer is awaiting.

The extrusion die 2 is connected at the end of the extruder and comprises the following parts, a general inlet 21, a conical alimentation section 22, an expansion portion 23 and an opening 24 having a specific design.

The opening 24 extends between and inlet 25 and an outlet 26 forming a passageway between the expansion portion 23 and the outlet 26 of the opening 24.

The opening 24 has a length and a width which can vary from the inlet 25 to the outlet 26 causing specific movement and shaping of the dough before it is discharged out of the extrusion die.

In case of co-extrusion process, a tube or nozzle 27 allowing inserting filling blend of ingredients passes through the middle of the extrusion die 2. The central co-extrusion nozzle 27 is represented in dotted line in figure 3.

The specific design of the outlet 26 will now be described in connection with figure 4 representing an axial view of the extrusion die of the figure 3. To be complete, figure 3 is a cross section of the extrusion die of figure 4 along the line A-A.

As can be seen from figure 4, the extrusion die presents in transversal cross-section:
- a circular central opened portion 28; and
- a peripheral indented opened portion 29 in which the indentions 30 of the indented portion 29 are in communication with the circular central portion.

The extruded product is discharged simultaneously though circular central opened portion 28 and peripheral indented opened portion 29.

The diameter of the circular central opened portion 28 is in the range of 2.5 to 8 mm. The indentations 30 are regularly spaced on the periphery of the circular central portion. In the present embodiment, there are 14 indentations but the number of indentations may vary between 8 and 20.

In the embodiment presented in figure 4, the indentations 30 are circular with a diameter of approximately 1 mm.

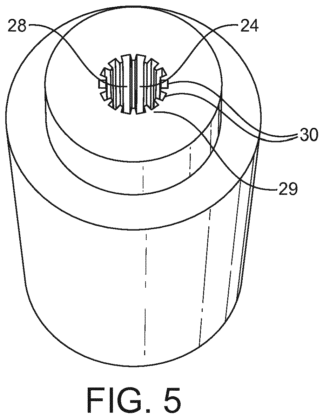

A photo of an extrusion die is presented on figure 5. One can see the circular central portion and the indentations 30 positioned all around the periphery of the central portion 28.

In view of the given dimensions of the circular central opened portion and the peripheral indented opened portion, the ratio of the surface between the circular central portion and the peripheral indented portion is in the range of 1:15 to 1:45.

As earlier mentioned, the extruded food product (for a pillow, including the filling) as a humidity level between 2.5 to 6.5% of the extruded food product thanks to a reduced water amount introduced in the extruded along with the blend of ingredients.

Hence, the dough that is processed in the extruder has a low level of water. This low humidity level in combination with the extrusion die used according to the invention leads to the formation of scales in the structure and especially at the surface level.

Indeed, thanks to the indentations formed at the periphery of the central opening of the extrusion die, the formation of scales is favoured all around the periphery of the rope formed during the extrusion process.

Thanks to the specific geometry of the die, the formation of scales at the surface of the rope exiting the extrusion die is controlled: the indentations allow to keep high level of scales at the surface of the rope while ensuring that the structure of the centre of the rope is preserved.

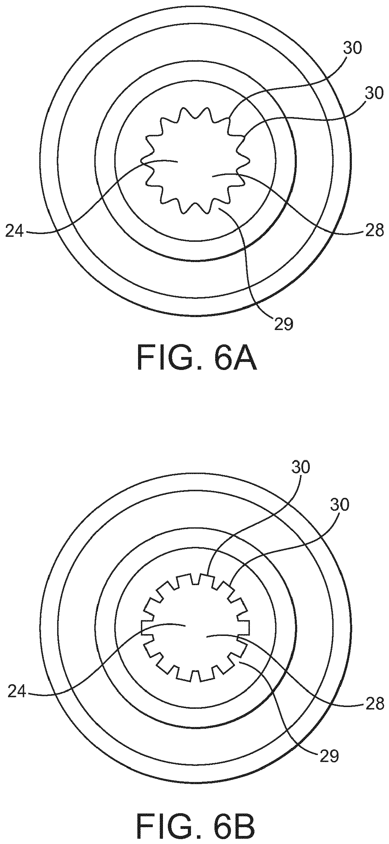

In alternative embodiments the indentations as viewed in transversal section may be triangular as represented on figure 6A or square as represented on figure 6B.

The alternative proposed indentation geometries allow to have a similar effect as the one obtained with the circular indentations presented in figure 4.

The specific effect that is obtained with the combination of the extrusion die used according to the invention and the specific humidity level of the extruded product is presented in figure 7.

The pillows presented in figure 7 show on the surface of the pillows some scales 31 linearly aligned along the main axis of the pillow. These scales give a very natural effect to the product. With their non-uniform surface, the pillows appear unprocessed in comparison to the conventional pillows produced by co-extrusion and as presented in figure 8.

In comparison, the pillows of figure 8 presenting a picture of breakfast cereal pillows manufactured using a conventional circular die and a process using conventional humidity conditions, have a flat and uniform surface 32.

The other parameters of the extrusion die are a matter of usual work for the skilled person and will not be detailed. For example in an industrial process the number of dies at the extruder end can go up to 16.

Extrusion die 2 may be formed of any suitable die material(s) as would be known to persons of ordinary skill in the art, including, by way of non-limiting example, stainless steel. Further, any suitable method of manufacturing extrusion die 2 may be used.

It should be appreciated that the manufacturing apparatus and method described herein has established a means to manufacture a cereal type product that has distinctive non-uniform appearance which is appealing to the consumer.

Although the invention has been described by way of example, it should be appreciated that variations and modifications may be made without departing from the scope of the invention as defined in the claims.

## Claims

1. Use of an extrusion die (2) for extruding a food product having a humidity level between 2.5 to 6.5% of the extruded food product, the extrusion die (2) being intended to be connected to the end of an extruder (1), said extrusion die presenting in transversal cross-section:
- a circular central opened portion (28); and
- a peripheral indented opened portion (29) comprising indentations (30) in which the indentations are in communication with the circular central portion thereby forming longitudinal grooves on the surface of the extruded product and
- in which extrusion die the ratio of the surface between the circular central portion (28) and the peripheral indented portion (29) is in the range of 1:15 to 1:45.

2. Use according to claim 1, in which the indentations (30) are regularly spaced on the periphery of the circular central portion (29).

3. Use according to claim 1 or 2, in which the indentations (30) are circular.

4. Use according to claim 1 or 2, in which the indentations (30) are triangular or square.

5. Use according to any of claims 1 to 4, in which the peripheral indented portion (29) comprises between 8 and 20 indentations (30).

6. Use according to any of claims 1 to 5, **characterized in that** the die accommodates a central co-extrusion nozzle (27).

7. Use of a food product manufacturing machine comprising an extrusion die as claimed in any of claims 1 to 6, further comprising an extruder (1) on the extremity of which is connected the extrusion die (2) for the manufacture of a stream of food product and a separating apparatus (5, 6) to form a plurality of individual food items from the stream of food product.

## Patentansprüche

1. Verwendung einer Extrusionsdüse (2) zum Extrudieren eines Nahrungsmittelprodukts mit einem Feuchtigkeitsgehalt zwischen 2,5 bis 6,5 % des extrudierten Nahrungsmittelprodukts, wobei die Extrusionsdüse (2) dazu vorgesehen ist, mit dem Ende eines Extruders (1) verbunden zu werden, wobei die Extrusionsdüse im transversalen Querschnitt zeigt:
- einen kreisförmigen geöffneten Mittelabschnitt (28); und
- einen umlaufenden eingekerbten geöffneten Abschnitt (29), der Einkerbungen (30) umfasst, wobei die Einkerbungen mit dem kreisförmigen zentralen Abschnitt in Verbindung stehen, wodurch Längsnuten auf der Oberfläche des extrudierten Produkts gebildet werden und
- wobei bei der Extrusionsdüse das Verhältnis der Oberfläche zwischen dem kreisförmigen Mittelabschnitt (28) und dem umlaufenden eingekerbten Abschnitt (29) im Bereich von 1:15 bis 1:45 liegt.

2. Verwendung nach Anspruch 1, wobei die Einkerbungen (30) regelmäßig auf dem Umfang des kreisförmigen Mittelabschnitt (29) beabstandet sind.

3. Verwendung nach Anspruch 1 oder 2, wobei die Einkerbungen (30) kreisförmig sind.

4. Verwendung nach Anspruch 1 oder 2, wobei die Einkerbungen (30) dreieckig oder quadratisch sind.

5. Verwendung nach einem der Ansprüche 1 bis 4, wobei der umlaufende eingekerbte Abschnitt (29) zwischen 8 und 20 Einkerbungen (30) umfasst.

6. Verwendung nach einem der Ansprüche 1 bis 5, **dadurch gekennzeichnet, dass** die Düse eine zentrale Co-Extrusionsmündung (27) beherbergt.

7. Verwendung einer Nahrungsmittelproduktfertigungsanlage, die eine Extrusionsdüse nach einem der Ansprüche 1 bis 6 umfasst, ferner umfassend einen Extruder (1), an dessen Endpunkt die Extrusionsdüse (2) zur Herstellung eines Stroms des Nahrungsmittelprodukts verbunden ist, und eine Trennvorrichtung (5, 6) zur Bildung einer Vielzahl von einzelnen Nahrungsmittelgegenstände aus dem Strom des Nahrungsmittelprodukts.

## Revendications

1. Utilisation d'une matrice d'extrusion (2) pour extruder un produit alimentaire ayant un taux d'humidité entre 2,5 et 6,5 % du produit alimentaire extrudé, la matrice d'extrusion (2) étant prévue pour être raccordée à l'extrémité d'une extrudeuse (1), ladite matrice d'extrusion présentant en coupe transversale :
- une partie ouverte centrale circulaire (28) ; et
- une partie ouverte dentelée périphérique (29) comprenant des dentelures (30) dans laquelle les dentelures sont en communication avec la partie centrale circulaire en formant de ce fait des rainures longitudinales sur la surface du produit extrudé et
- dans cette matrice d'extrusion, le rapport de la surface entre la partie centrale circulaire (28) et la partie dentelée périphérique (29) est dans la plage de 1:15 à 1:45.

2. Utilisation selon la revendication 1, dans laquelle les dentelures (30) sont espacées régulièrement sur la périphérie de la partie centrale circulaire (29).

3. Utilisation selon la revendication 1 ou 2, dans laquelle les dentelures (30) sont circulaires.

4. Utilisation selon la revendication 1 ou 2, dans laquelle les dentelures (30) sont triangulaires ou carrées.

5. Utilisation selon l'une quelconque des revendications 1 à 4, dans laquelle la partie dentelée périphérique (29) comprend entre 8 et 20 dentelures (30).

6. Utilisation selon l'une quelconque des revendications 1 à 5, **caractérisée en ce que** la matrice accueille une buse de coextrusion centrale (27).

7. Utilisation d'une machine de fabrication de produit alimentaire comprenant une matrice d'extrusion selon l'une quelconque des revendications 1 à 6, comprenant en outre une extrudeuse (1) sur l'extrémité de laquelle est raccordée la matrice d'extrusion (2) pour la fabrication d'un courant de produit alimentaire et un appareil de séparation (5, 6) pour former une pluralité d'articles alimentaires individuels à partir du courant de produit alimentaire.
